# EUROPÄISCHE PATENTANMELDUNG

(11) **EP 4 779 164 A1**
(43) Veröffentlichungstag der Anmeldung: **22.07.2026**
(21) Anmeldenummer: 26000002.1
(22) Anmeldetag: 16.01.2026
(51) Int. Cl.: F16C 1/14, F16G 11/00, D07B 1/06, D07B 1/18, D07B 5/00, D07B 9/00

(54) **SEILZUG**

(30) Priorität: 21.01.2025 DE 102025000212
(71) Anmelder: SZW Prophet GmbH, 98694 Ilmenau / OT Gehren (DE)
(72) Erfinder: Prophet, Jörg, 99734 Nordhausen (DE); Prophet, Erik, 99092 Erfurt (DE)
(74) Vertreter: Weihrauch, Frank

(57) **Zusammenfassung**

Die vorliegende Erfindung betrifft einen Seilzug, aufweisend ein Zugseil (1) und einen Nippel (2), wobei das Zugseil (1) als ein Spiralseil ausgebildet ist und eine Mehrzahl von Seildrähten (3) aufweist, die, verdreht mit erster Steigung (5.1), miteinander verseilt sind, wobei der Nippel (2) einen Seilendabschnitt (4) und einen Nippelhüllkörper (7) aufweist, wobei der Seilendabschnitt (4) die Seildrähte (3) verdreht mit einer zweiten Steigung (5.2) angeordnet sind, wobei die zweite Steigung (5.2) geringer ist als die erste Steigung (5.1) und wobei sich die Seildrähte (3) in dem Seilendabschnitt (4) seitlich zueinander gegenseitig abstützen, wobei der Seilendabschnitt (4) einen Endabschnittdurchmesser (6.2) aufweist, der einen Zugseildurchmesser (6.1) um 10 % oder mehr übersteigt und wobei der Nippelhüllkörper (7) den Seilendabschnitt (4) radial umfasst und mindestens einen Formabschnitt (8) für eine axiale Kraftübertragung aufweist.

## Beschreibung

Die Erfindung betrifft einen Seilzug mit einem Endabschnitt zur axialen Kraftübertragung.

Aus dem Stand der Technik sind Seilzüge als solche bekannt. Sie dienen der Übertragung von Zugkräften. Seilzüge können zudem mit einer flexiblen Führungshülle ausgebildet sein, wobei in dem speziellen Fall des Bowdenzugs mittels einer flexiblen, aber axial druckfesten Hülle zudem ein Gegenlager zur Abstützung der zu übertragenden Zugkräfte bereitgestellt wird. Zur Bereitstellung einer hohen Flexibilität ist es zudem bekannt, das Zugseil mehradrig als Drahtseil auszubilden.

Um die Zugkräfte übertragen zu können bedarf es einer Kopplung zu der zu betätigenden Einrichtung. Eine bekannte Lösung ist eine reibschlüssige Klemmung oder Verpressung. Diese weist zwar den Vorzug einer einfachen Positionierbarkeit und Einstellbarkeit auf, führt jedoch nachteilig zu einer lokalen Gefügeveränderung des Zugseils infolge von Quetschungen, zur einer mehrachsigen Belastung der Drahtseiladern in dem Klemmbereich sowie regelmäßig zu einer ungleichmäßigen Belastung der einzelnen Drahtseiladern. Nachteilig muss ein erheblicher Abminderungsfaktor berücksichtigt werden, so dass der Seilzug größer dimensioniert werden muss, was mit entsprechenden Mehrkosten und zusätzlichem Gewicht verbunden ist.

Eine alternative Lösung besteht in der Ausbildung von Endabschnitten in Form von Nippeln, die eine formschlüssige Kopplung zu dem zu bewegenden Maschinenteil ermöglichen. Hierbei können die Nippel beispielsweise als Druckgussnippel ausgebildet werden, wobei hier das Druckgussmaterial an das Seilende angegossen wird. Die Kraftübertragung zwischen dem Seilende und dem Druckgussmaterial beruht auf einem Stoffschlussanteil und einem Formschlussanteil.

Um die Kraftübertragung zu verbessern und den Nippel in axialer Erstreckung kürzer ausbilden zu können ist es bekannt, dass Seilende vor dem Angießen des Druckgussmaterials anzustauchen. Durch das Anstauchen verformen und verwerfen sich die Drahtseiladern unregelmäßig, so dass Zwischenräume zwischen den Drahtseiladern erzeugt werden, in die das Druckgussmaterial bei dem Angießen eindringen, auf diese Weise die Drahtseiladern allseitig umschließen und somit über eine große Oberfläche stoffschlüssig koppeln soll. Nachteilig ist die geringe Prozesssicherheit, da die Art der Verformung der einzelnen Drahtseiladern nicht vorherbestimmbar ist, so dass bereits dadurch einzelne Drahtseiladern stärker mit Zugkräften beaufschlagt werden als andere Drahtseiladern. Zudem besteht die Gefahr, dass das Druckgussmaterial nicht in alle Zwischenräume eindringt.

Die Aufgabe der Erfindung ist es, einen Seilzug mit einem Endabschnitt zur axialen Kraftübertragung bereitzustellen, der eine hohe Belastbarkeit aufweist, eine zuverlässige Prozesssicherheit bei einer maschinellen Herstellung ermöglicht und materialschonend und kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Der erfindungsgemäße Seilzug weist als Grundkomponenten ein Zugseil und einen Nippel auf.

Das Zugseil ist als ein mehradriges Spiralseil ausgebildet; es weist eine Mehrzahl von Seildrähten auf. Die Seildrähte sind mittels Verdrehung miteinander verseilt. Die Verdrehung ist bevorzugt, wie bei Seilzügen üblich, vergleichsweise gering, um unnötig hohe Torsionskräfte unter Zugbelastung zu vermeiden.

Der Grad der Verdrehung kann durch die Steigung ausgedrückt werden, wobei eine geringe Verdrehung eine hohe Steigung bedeutet und umgekehrt. Die Steigung der Seildrähte in dem Zugseil wird vorliegend als die erste Steigung bezeichnet.

Die weitere Grundkomponente ist der erfindungsgemäß ausgebildete Nippel. Andere mögliche Bezeichnungen für einen Nippel sind auch Endfitting, Abschlussfitting oder Terminal. Der Nippel wird durch einen Seilendabschnitt in Verbindung mit einem Nippelhüllkörper gebildet.

In dem Seilendabschnitt sind die Seildrähte ebenfalls verdreht angeordnet. Es handelt sich hierbei um dieselben Seildrähte wie in dem Zugseil. Der Seilendabschnitt ist jedoch dadurch gekennzeichnet, dass hier eine stärkere Verdrehung vorliegt als in dem Zugseil. Die der Verdrehung in dem Zugseil entsprechende Steigung wird vorliegend als die zweite Steigung bezeichnet.

Erfindungsgemäß ist somit die zweite Steigung geringer als die erste Steigung. Ferner ist es wesentlich für den erfindungsgemäßen Nippel, dass die Seildrähte seitlich längs aneinander anliegen. Im Gegensatz zu einem nach dem Stand der Technik angestauchten Endabschnitt liegen somit keine knäuelartigen Verformungen der Seildrähte und keine dadurch bedingten Hohlräume vor. Die Seildrähte weisen vielmehr eine regelmäßige und geordnete Form und Ausrichtung auf. Dies bedeutet, dass sich die Seildrähte in dem Seilendabschnitt somit seitlich gegenseitig abstützen und sich gegenseitig in ihrer Lagebeziehung zueinander festlegen. Durch die gegenseitige Anlage und Abstützung bilden die Drahtseile des Seilendabschnitt im Gegensatz zu einer Anstauchung nach dem Stand der Technik ein festes Paket und somit quase einen geschlossenen Körper. Die regelmäßige und geordnete Form und Ausrichtung lässt sich im Wesentlichen als eine mehrgängige helixartige Form beschreiben. Die Anzahl der Seildrähte bestimmt die Anzahl der Gänge.

Durch die geringere zweite Steigung sind die Seildrähte stärker geneigt. Sie benötigen dadurch in einer zur Hauptlängsachse orthogonalen Schnittebene mehr Platz als bei der höheren Steigung des Zugseils außerhalb des Seilendabschnitts. Damit ist verbunden, dass der Durchmesser des Seilendabschnitts, hier bezeichnet als Endabschnittdurchmesser, größer ist als der Durchmesser des Zugseils, hier bezeichnet als Zugseildurchmesser, wobei der Endabschnittdurchmesser den Zugseildurchmesser um 10 % oder mehr übersteigt.

Der Nippelhüllkörper umfasst radial den Seilendabschnitt. Vorzugsweise handelt es sich um einen angegossenen Druckguss-Körper. Indem der Hüllkörper den Seilendabschnitt von außen umschließt, verhindert er dessen Verformung und hält die Helixform auch unter der Einwirkung einer Zugkraft. Insbesondere bei einem Druckguss-Körper formt sich das Druckgussmaterial an die gesamte äußere Mantelfläche der außenliegenden Seildrähte an und fixiert somit zuverlässig deren Lagebeziehung.

Ferner weist der Nippelhüllkörper mindestens einen Formabschnitt für eine axiale Kraftübertragung auf. Hierbei kann es sich im einfachen Fall um eine axiale in Richtung des Zugseils gerichtete Ringfläche handeln, die auch als Auflagekranz bezeichnet werden kann. Es ist jedoch auch möglich, den Nippelkörper für besondere Anwendungsfälle beispielsweise mit einem Auge, einer Gabel, einem Gewindeabschnitt, einer gerippten Fläche oder in sonstiger Weise auszubilden, wobei dann das Auge, die Gabel, der Gewindeabschnitt, die gerippte Fläche oder die sonstige Formung als ein Formabschnitt für eine axiale Kraftübertragung zu verstehen ist. Maßgeblich ist die Eignung für eine Ankopplung an eine passive zu betätigende Einrichtung oder an eine aktive Betätigungseinrichtung und die Eignung für eine Übertragung einer Zugkraft.

Mit dem erfindungsgemäßen Nippel wurde in Abkehr von den Überlegungen nach dem Stand der Technik überraschend eine besonders vorteilhafte Lösung gefunden.

Der Stand der Technik versucht durch eine Anstauchung die Seildrähte in einem Endabschnitt möglichst unregelmäßig zu verformen und zu verwerfen, um so Hohlräume zu schaffen, die von einem Druckgussmaterial durchdrungen werden sollen, um möglichst alle Abschnitte der Oberfläche der Seildrähte zu erreichen und dort eine stoffschlüssige Verbindung zu erreichen.

Dem gegenüber wird mit dem erfindungsgemäßen Nippel mittels der regelmäßigen helixartigen Anordnung der Seildrähte und ihrer gegenseitige Abstützung mit dem Seilendabschnitt ein festes Paket mit den Eigenschaften eines tonnenförmigen Quasi-Körpers geschaffen.

Der Quasi-Körper ermöglicht somit vorteilhaft eine im Wesentlichen formschlüssige Kraftübertragung zunächst auf den Nippelhüllkörper und dann weiter auf die zu betätigende Einrichtung. Der Nippelhüllkörper stabilisiert zudem vorteilhaft zugleich den Seilendabschnitt in seiner Eigenschaft als Quasi-Körper. Vorteilhaft kommt es damit nicht darauf an, dass der Nippelhüllkörper in Zwischenräume zwischen den Seildrähten vordringt. Der Quasi-Körper soll vielmehr im Gegenteil möglichst keine Zwischenräume aufweisen.

Vorteilhaft kann im Gegensatz zu einer Anstauchung eine höhere Prozesssicherheit erreicht werden, da die regelmäßige helixförmige Verdrehung der Seildrähte und deren Steigung fertigungstechnisch zuverlässig und reproduzierbar steuerbar ist.

Zudem ist durch die regelmäßige helixförmige Anordnung der Seildrähte eine gleichmäßige Belastung sichergestellt, so dass einem Versagen zunächst einzelner Seildrähte und in der Folge einem etwaigen Gesamtversagen vorgebeugt wird.

Im Ergebnis werden durch den höheren Formschlussanteil und durch die Gleichmäßigkeit der Belastung der einzelnen Seildrähte eine höhere Belastbarkeit und eine höhere Betriebssicherheit erreicht.

Das Volumen eines Nippels setzt sich zusammen aus dem Volumenanteil des Druckgussmaterials und dem Volumenanteil, der durch die Seildrähte selbst gebildet wird. Vorteilhaft ist der erfindungsgemäße Nippel dadurch gekennzeichnet, dass der durch die Seildrähte bereitgestellte Volumenanteil infolge der kompakten und geschlossenen Anordnung der Seildrähte wesentlich höher ist als bei einem Nippel nach dem Stand der Technik mit angestauchten Seildrähten. Hiermit wird vorteilhaft eine Materialeinsparung des vergleichsweise teuren Druckgussmaterials ermöglicht.

Vorteilhaft wird auch der Prozess des Angießens des Druckgussmaterials vereinfacht, da es im Gegensatz zum Stand der Technik nicht maßgeblich auf eine vollständige Durchdringung von Zwischenräumen zwischen den Seildrähten ankommt.

Gemäß einer vorteilhaften Weiterbildung ist der Seilzug dadurch gekennzeichnet, dass die zweite Steigung einen Steigungswinkel beta (β) von 60 Grad oder weniger aufweist.

Der Angabe des Steigungswinkels beruht auf denselben Berechnungsmethoden wie die Berechnung des Steigungswinkels eines Gewindes. Bei dem bevorzugten Steigungswinkel von 60 Grad oder weniger wird ein Seilendabschnitt mit hoher Kompaktheit und vorteilhafter Formung erreicht. Besonders bevorzugt beträgt der Steigungswinkel 60 Grad bis 30 Grad.

Entsprechend einer anderen vorteilhaften Weiterbildung ist der Seilzug dadurch gekennzeichnet, dass eine Summe der zu einer Hauptlängsachse orthogonalen Schnittflächen der Seildrähte in dem Zugseil einen ersten Flächeninhalt aufweist und dass eine Summe der zu der Hauptlängsachse orthogonalen Schnittflächen der Seildrähte in dem Seilendabschnitt einen zweiten Flächeninhalt aufweist und dass der zweite Flächeninhalt mindestens 10 % größer ist als der erste Flächeninhalt. Dies bedeutet dass der zweite Flächeninhalt mindestens 110 % des ersten Flächeninhalts aufweist.

Dieser Bereichsangabe liegt zu Grunde, dass durch die Schrägstellung der Seildrähte zur der Hauptlängsachse die Schnittfläche der Seildrähte eine ovale Fläche ist. Durch die stärkere Neigung in dem Seilendabschnitt liegt eine stärkere Ovalität vor als in dem Zugseil, wo aufgrund der geringen Neigung annähernd noch eine Kreisfläche vorliegt. Die ovale Fläche weist einen größeren Flächeninhalt auf, wobei die Summe der Schnittflächen die unterschiedliche Gesamtquerschnittfläche einerseits des Seilendabschnitts und andererseits des Zugseils bewirkt.

Nach einer weiteren vorteilhaften Weiterbildung ist das Seilzug dadurch gekennzeichnet, dass der Nippelhüllkörper als ein Zink-Druckguss-Körper ausgebildet ist. Vorteilhaft wird gemäß dieser Weiterbildung damit auf erprobte und bewährte Werkstoffe und Fertigungstechnologien zurückgegriffen. Zudem können bestehende Fertigungsmaschinen mit lediglich geringen Modifikationen verwandt werden. Insbesondere können hierbei Zamak-Legierungen eingesetzt werden.

Soweit in der Beschreibung und in den Ansprüchen Numerale wie erster, zweiter oder Ähnliches verwandt werden dient dies nicht zur Kennzeichnung einer bestimmten Hierarchie oder Wertigkeit, sondern lediglich zur eindeutigen Identifizierung und Zuordnung.

Die Erfindung wird als Ausführungsbeispiel anhand von
- Fig. **1**: Isometrische Darstellung mit Nippelhüllkörper
- Fig. 2: Isometrische Darstellung ohne Nippelhüllkörper
- Fig. 3: Schematische Darstellung der orthogonalen Schnittflächen
näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

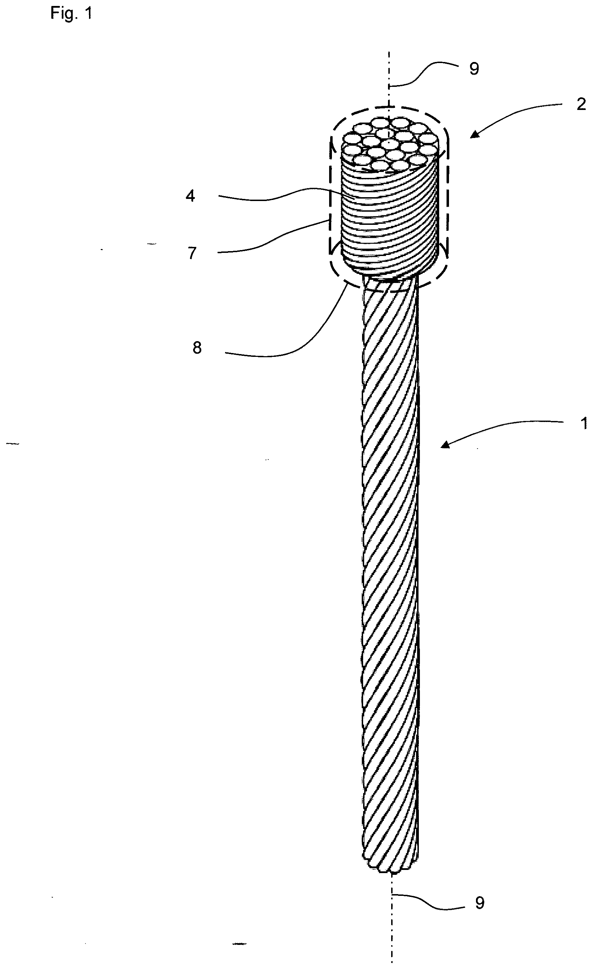

Fig. 1 zeigt ein Ausführungsbeispiel eines Seilzugs einschließlich schematischer Darstellung des Nippelhüllkörpers, wobei hier lediglich die Konturen dargestellt sind.

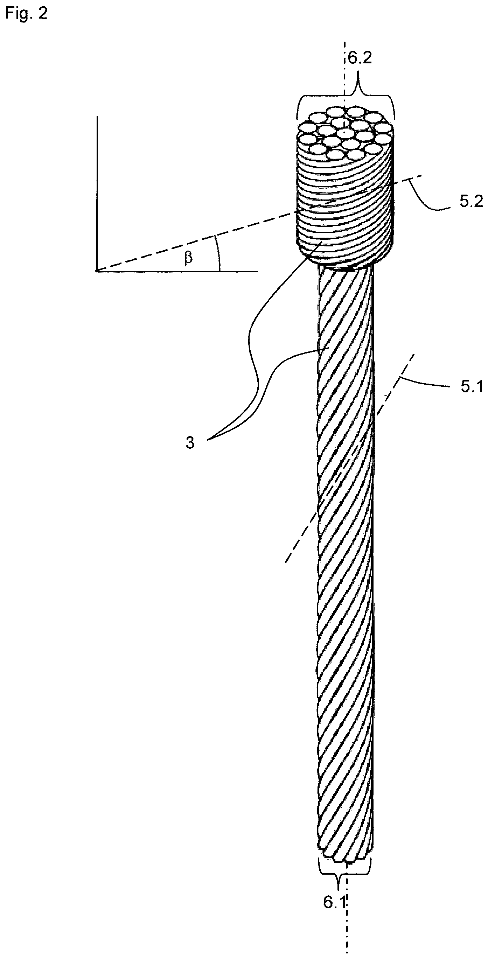

Fig. 2 zeigt das gleiche Ausführungsbeispiel in dem Zustand noch vor dem Angießen des Nippelhüllkörpers.

Nachfolgend werden die Fig. 1 und Fig. 2 zusammen näher beschrieben.

In dem Ausführungsbeispiel wurde für den Seilzug ein Spiralseil Typ 1 x 19 verwandt, das 19 mit einem Z-Schlag verdrehte Drahtseile 3 aufweist. Das Zugseil 1 und der Nippel 2 bilden die Grundkomponenten des Seilzugs. Die Hauptlängsachse 9 verläuft in der Längserstreckung des Seilzugs.

In dem Zugseil 1 sind die Drahtseile 3 mit einer ersten Steigung 5.1 verdreht. Der Zugseildurchmesser 6.1 beträgt 6 mm. In dem Nippel sind die Drahtseile 3 in dem Seilendabschnitt 4 fortgeführt. In dem Seilendabschnitt 4 sind die Drahtseile 3 mit einer zweiten Steigung 5.2 verdreht. Die beiden Steigungen 5.1, 5.2 sind in Fig. 2 jeweils durch eine Strichlinie veranschaulicht. Der Steigungswinkel beta β der zweiten Steigung beträgt etwa 35 Grad. Insbesondere die äußeren 12 der 19 Drahtseile 3 weisen eine gleichmäßige helixförmige Anordnung in kompakter Packung auf, so dass sie aneinander anliegen und sich gegenseitig stützen und in ihrer Lage wechselseitig stabilisieren. Der Seilendabschnitt 4 weist einen Endabschnittdurchmesser 6.2 von ca. 8 mm auf und übersteigt damit den Zugseildurchmesser 6.1.

Fig. 1 zeigt zudem die Anordnung des Nippelhüllkörpers 7, der in dem Ausführungsbeispiel aus Zink-Druckguss ausgebildet ist und eine zylindrische Grundform aufweist. Der Nippelhüllkörper ist in Fig. 1 durch eine Strichlinie dargestellt. Der Nippelhüllkörper 7 umschließt umlaufend den Seilendabschnitt 4, wodurch die Drahtseile 3 in ihrer Anordnung in dem Seilendabschnitt 4 festgelegt werden. Zugleich bildet der Nippelhüllkörper 7 in proximaler Richtung eine über den Querschnitt des Zugseils 1 radial überstehende axiale Ringfläche. Bei dieser Ringfläche handelt es sich in dem vorliegenden Ausführungsbeispiel um den Formabschnitt 8 für eine axiale Kraftübertragung. An dieser Ringfläche wird der Nippel 2 von der zu betätigenden Einrichtung aufgenommen, so dass Zugkräfte übertragen werden können. Da der Seilendabschnitt 4 mit seinem größeren Endabschnittdurchmesser 6.2 ohnehin bereits etwas über den Zeilzugdurchmesser 6.1 übersteht, kann der Nippelhüllkörper 7 mit einer radialen Überdeckung von etwa nur einem Millimeter sehr materialsparend ausgebildet werden.

In dem vorliegenden Ausführungsbeispiel handelt es sich um einen Seilzug für eine KFZ-Anwendung.

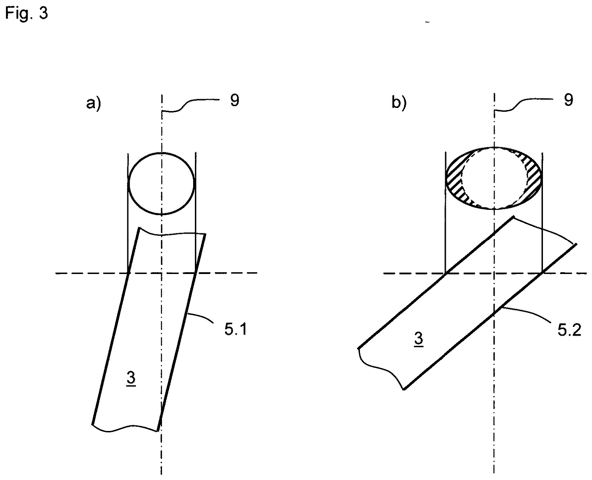

Fig. 3 zeigt ergänzend in einer schematische Darstellung eine Gegenüberstellung der Flächeninhalte bei orthogonal zu der Hauptlängsachse 9 geschnittenem Seildraht 3; einerseits in dem Zugseil 1 - hier Figurenteil a) und andererseits in dem Seilendabschnitt 4 - hier Figurenteil b). Der Figurenteil a) zeigt die geringere Neigung und damit größere Steigung, also die erste Steigung 5.1 des Seildrahts 3 in dem Zugseil 1 und die daraus resultierende Schnittfläche mit geringerer Ovalität. Im Vergleich hierzu zeigt der Figurenteil b) die stärkere Neigung und damit geringere Steigung, also die zweite Steigung 5.2 des Seildrahts 3 in dem Seilendabschnitt 4 mit entsprechend größerer Ovalität und damit größerem Flächeninhalt.

In dem Figurenteil b) ist der Flächeninhalt der Schnittfläche mit geringerer Ovalität zum Zweck des Vergleichs einprojiziert. Der zusätzliche Flächeninhalt ist durch Schraffur hervorgehoben.

### Verwendete Bezugszeichen

- 1: Zugseil
- 2: Nippel
- 3: Seildrähte
- 4: Seilendabschnitt
- 5.1: erste Steigung
- 5.2: zweite Steigung
- 6.1: Zugseildurchmesser
- 6.2: Endabschnittdurchmesser
- 7: Nippelhüllkörper
- 8: Formabschnitt
- 9: Hauptlängsachse
- β: Steigungswinkel beta

## Patentansprüche

1. Seilzug,
aufweisend ein Zugseil (1) und einen Nippel (2),
wobei das Zugseil (1) als ein Spiralseil ausgebildet ist und eine Mehrzahl von Seildrähten (3) aufweist, die, verdreht mit erster Steigung (5.1), miteinander verseilt sind,
wobei der Nippel (2) einen Seilendabschnitt (4) und einen Nippelhüllkörper (7) aufweist,
wobei der Seilendabschnitt (4) die Seildrähte (3) verdreht mit einer zweiten Steigung (5.2) angeordnet sind, wobei die zweite Steigung (5.2) geringer ist als die erste Steigung (5.1) und wobei sich die Seildrähte (3) in dem Seilendabschnitt (4) seitlich zueinander gegenseitig abstützen,
wobei der Seilendabschnitt (4) einen Endabschnittdurchmesser (6.2) aufweist, der einen Zugseildurchmesser (6.1) um 10 % oder mehr übersteigt, wobei der Nippelhüllkörper (7) den Seilendabschnitt (4) radial umfasst und mindestens einen Formabschnitt (8) für eine axiale Kraftübertragung aufweist.

2. Seilzug nach Anspruch 1,
**dadurch gekennzeichnet,**
**dass** die zweite Steigung (5.2) einen Steigungswinkel beta (β) von 60 Grad oder weniger aufweist.

3. Seilzug nach einem der vorhergehenden Ansprüche,
**dadurch gekennzeichnet,**
**dass** eine Summe der zu einer Hauptlängsachse (9) orthogonalen Schnittflächen der Seildrähte (3) in dem Zugseil (1) einen ersten Flächeninhalt aufweist und dass eine Summe der zu der Hauptlängsachse (9) orthogonalen Schnittflächen der Seildrähte (3) in dem Seilendabschnitt (4) einen zweiten Flächeninhalt aufweist und dass der zweite Flächeninhalt 110 % des ersten Flächeninhalts oder mehr aufweist.

4. Seilzug nach einem der vorhergehenden Ansprüche,
**dadurch gekennzeichnet,**
**dass** der Nippelhüllkörper (7) als ein Zink-Druckguss-Körper ausgebildet ist.
